# FASCICULE DE BREVET EUROPEEN

(11) **EP 3 590 330 B1**
(45) Date de publication et mention de la délivrance du brevet: **12.06.2024**
(21) Numéro de dépôt: 19183612.1
(22) Date de dépôt: 01.07.2019
(51) Int. Cl.: A01K 1/015, A01K 1/01

(54) **REVÊTEMENT DESTINÉ À ÊTRE RAPPORTÉ SUR LE SOL D'UNE ENCEINTE POUR L'ÉLEVAGE D'ANIMAUX, AVANTAGEUSEMENT UN COULOIR DE CIRCULATION LONGEANT AU MOINS UN ESPACE D'ACCUEIL DESDITS ANIMAUX**
BESCHICHTUNG ZUM AUFBRINGEN AUF EINEN BODEN EINES GEHÄUSES FÜR TIERZUCHT, INSBESONDERE EINEM UMLAUFGANG, DER MINDESTENS EINEN AUFNAHMEBEREICH FÜR DIESE TIERE UMFASST
COATING DESIGNED TO BE ADDED TO THE FLOOR OF AN ENCLOSURE FOR FARM ANIMALS, ADVANTAGEOUSLY A CIRCULATION TRACK RUNNING ALONG AT LEAST ONE STABLING SPACE FOR SAID ANIMALS

(30) Priorité: 03.07.2018 FR 1856115
(43) Date de publication de la demande: 08.01.2020
(73) Titulaire: Bioret Agri-Logette Confort, 44850 Mouzeil (FR)
(72) Inventeur: BIORET, Jean-Vincent, 44390 Petit Mars (FR)
(74) Mandataire: Jacobacci Coralis Harle

(56) Documents cités:
- EP-A1- 2 810 553
- DE-A1-102011 055 211
- FR-A1- 2 486 769
- US-A- 4 479 280
- US-A1- 2005 086 886
- US-A1- 2014 203 014
- US-A1- 2015 107 523

## Description

La présente invention concerne, de manière générale, le domaine des revêtements destinés à être rapporté sur le sol d'une enceinte pour l'élevage d'animaux.

Elle concerne avantageusement le domaine des revêtements destinés à être rapporté sur le sol d'un couloir de circulation longeant au moins un espace d'accueil desdits animaux.

### ARRIERE-PLAN TECHNOLOGIQUE

Le confort des animaux constitue un paramètre déterminant dans le rendement d'un élevage, qui influence notamment la santé, la prise alimentaire, la fertilité et la longévité des animaux.

Ce confort des animaux est régi en particulier par des obligations légales qui sont définies dans les Traités d'Amsterdam (1999) et de Lisbonne (2009) relatifs au Protocole sur la protection et le bien-être des animaux, ainsi que par l'adoption de la seconde stratégie européenne pour le bien-être animal.

En particulier, les espaces d'accueil (par exemple les logettes et/ou les tables d'alimentation) doivent rester le plus propre possible pour limiter les problèmes sanitaires (notamment les mammites chez les vaches laitières).

Pour cela, les étables sont généralement conçues de sorte que les couloirs de circulation reçoivent les déjections produites par les animaux. Il est alors plus aisé de collecter ces déjections, par exemple au moyen d'un racleur.

Mais, du fait de cette approche, les pattes des animaux sont souvent souillées lors de la circulation le long des couloirs de circulation, avant d'atteindre les espaces d'accueil.

Ces animaux transportent ainsi des quantités relativement importantes de déjections dans les espaces d'accueil, dégradant les conditions sanitaires sauf à multiplier les opérations de nettoyage.

Le document US 2005/086886 A1 décrit un enceinte pour l'élevage d'animaux comportant un couloir de circulation longeant au moins un espace d'accueil des animaux. Le couloir de circulation est recouvert par un revêtement de sol comprenant une bande latérale avec une pente qui descend depuis ledit espace d'accueil.

Il existe par conséquent un besoin de solutions techniques permettant une réduction de la salissure dans les espaces d'accueil, avantageusement cela sans nécessiter des travaux de gros oeuvre importants, de sorte à améliorer les conditions sanitaires au sein des espaces d'accueil.

Il serait en effet intéressant de limiter l'entrainement des salissures lors du passage des animaux depuis les couloirs de circulation vers les espaces d'accueil.

### OBJET DE L'INVENTION

Afin de remédier à l'inconvénient précité de l'état de la technique, la présente invention propose un revêtement selon la revendication 1 destiné à être rapporté sur le sol d'une enceinte pour l'élevage d'animaux, avantageusement un couloir de circulation longeant au moins un espace d'accueil desdits animaux.

Le revêtement comporte deux surfaces opposées :
- une surface inférieure, destinée à reposer sur le sol, et
- une surface supérieure, opposée, destinée à servir de surface d'appui pour les animaux.

La surface supérieure du revêtement de sol comporte une bande centrale bordée par au moins une bande latérale, laquelle bande latérale est délimitée par deux bordures longitudinales :
- une bordure intérieure longeant ladite bande centrale, et
- une bordure extérieure, à distance de ladite bande centrale, formant une bordure latérale de ladite surface supérieure.

Et, selon l'invention, ladite au moins une bande latérale présente une pente qui descend en direction de ladite bande centrale, depuis ladite bordure extérieure jusqu'à ladite bordure intérieure.

Le revêtement de sol comprend :
- une couche supérieure, formant la surface supérieure dudit revêtement de sol, avantageusement réalisée dans un matériau élastique, et
- au moins un longeron sous-jacent, destiné à être rapporté entre le sol et ladite couche supérieure, pour former ladite au moins une bande latérale.

En pratique, cette pente descendante de ladite au moins une bande latérale génère un écoulement des liquides (ou « jus ») vers le bande centrale.

Cette bande latérale reste alors relativement sèche, limitant la contamination des pattes des animaux avant de passer dans les espaces d'accueil.

En particulier, cette bande latérale est utile le long d'un cornadis. Elle éloigne en effet les liquides par rapport aux pattes antérieures des animaux en présence.

Une telle bande latérale est aussi intéressante le long d'une logette. En effet, pour accéder à cette logette, les derniers pas des animaux s'effectuent sur une surface relativement sèche. L'entraînement des salissures vers les espaces d'accueil est ainsi limité. Cette approche est notamment intéressante pour limiter les salissures des mamelles des vaches laitières avec le risque de mammite qui en découle.

D'autres caractéristiques non limitatives et avantageuses du revêtement de sol conforme à l'invention, prises individuellement ou selon toutes les combinaisons techniquement possibles, sont les suivantes :
- la surface supérieure du revêtement est polyédrique, avec la bande centrale ménagée entre les deux bandes latérales en pente ;
- la largeur de ladite au moins une bande latérale, définie horizontalement entre lesdites bordures longitudinales, est de préférence de 200 à 800 mm, de préférence encore de 200 à 300 mm ;
- ladite au moins une bande latérale comporte une pente allant de 1 à 10 %, de préférence allant de 1,5 et 6%, de préférence encore allant de 3 à 5% ;
- ledit au moins longeron comporte avantageusement une extrémité intérieure ayant une hauteur de 1 à 3 mm, et une extrémité extérieure ayant une hauteur de 10 à 20 mm ;
- ledit au moins un longeron est réalisé en matériau caoutchouc ou en matériau plastique ;
- l'épaisseur de la couche supérieure est constante ;
- ledit au moins un longeron est formé par plusieurs pièces juxtaposées et alignées, lesquelles pièces comportent des bordures transversales attenantes munies de structures d'emboîtement complémentaires.

La présente invention concerne aussi une enceinte pour l'élevage d'animaux selon la revendication 7 dont au moins une partie du sol est recouverte par un revêtement de sol selon l'invention.

De préférence, l'enceinte comporte un couloir de circulation longeant au moins un espace d'accueil des animaux, par exemple une table d'alimentation et/ou une rangée de logettes.

Dans ce cadre, le couloir de circulation est recouvert par ledit revêtement de sol de sorte que ladite au moins une bande latérale est disposée au niveau de la transition entre ledit couloir de circulation et ledit espace d'accueil.

Ce couloir de circulation est avantageusement équipé d'un racleur destiné à transporter le lisier / les déjections, lequel racleur comporte plusieurs panneaux :
- un panneau central destiné à parcourir la bande centrale dudit revêtement, et
- au moins un panneau latéral escamotable, destiné à parcourir ladite au moins une bande latérale dudit revêtement,
lequel au moins un panneau latéral comporte différentes bordures :
- une bordure inférieure, en regard de ladite bande latérale,
- une bordure supérieure, à distance de ladite bande latérale,
- une bordure intérieure, raccordée audit panneau central, et
- une bordure extérieure, libre,
laquelle bordure inférieure comporte une pente descendante depuis ladite bordure extérieure vers ladite bordure intérieure.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement, de manière générale et vue de côté, une enceinte pour l'élevage d'animaux selon l'invention ;
- la figure 2 est une vue partielle et agrandie de la figure 1, qui montre plus en détails deux couloirs de circulation équipés chacun d'un revêtement de sol selon l'invention ;
- les figures 3 et 4 représentent schématiquement, selon un plan de coupe transversal, un couloir de circulation équipé d'un revêtement de sol selon deux modes de réalisation alternatifs ;
- les figures 5 et 6 représentent, respectivement vue de côté et vue de dessous, une pièce isolée qui est adaptée à former une partie d'un longeron sous-jacent destiné à être rapporté entre le sol et une couche supérieure pour former une bande latérale inclinée.

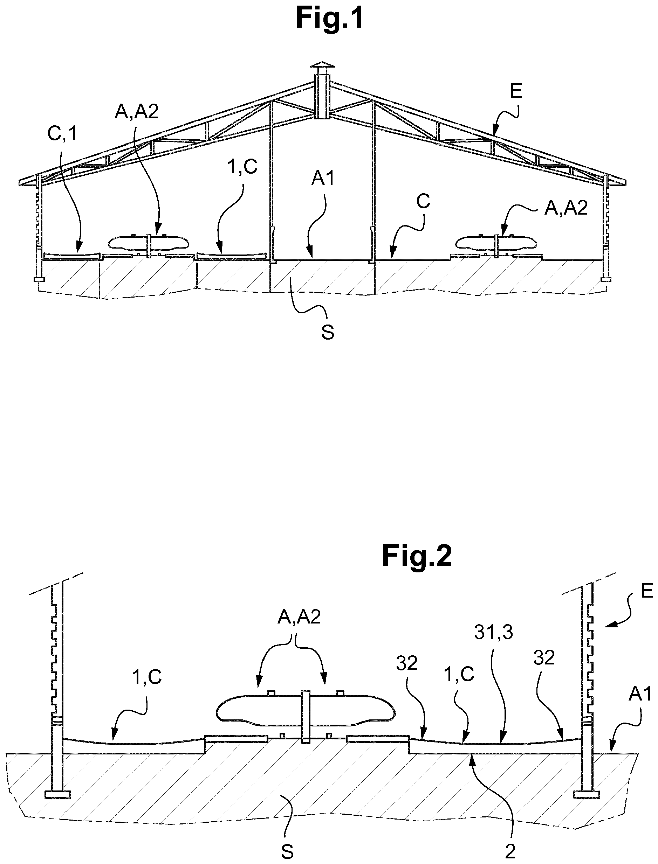

Tel que représenté de manière générale sur les figures 1 et 2, le revêtement de sol 1 selon l'invention consiste en un accessoire qui est destiné à équiper une enceinte E pour l'élevage d'animaux.

### Enceinte pour l'élevage

Les figures 1 et 2 représentent schématiquement, uniquement à titre d'exemple, une enceinte E pour l'élevage d'animaux.

Par « animaux », on entend en particulier les bovins, en particulier les vaches laitières ou les bovins à viande.

L'enceinte d'élevage E consiste en un bâtiment délimité par un bâti et adapté à l'élevage souhaité (par exemple une étable dans le cas de bovins).

Le sol S de cette enceinte d'élevage consiste avantageusement en un sol réalisé en béton ou en bitume.

Cette enceinte d'élevage E comprend ici différentes zones, notamment un couloir de circulation C longeant au moins un espace d'accueil des animaux A.

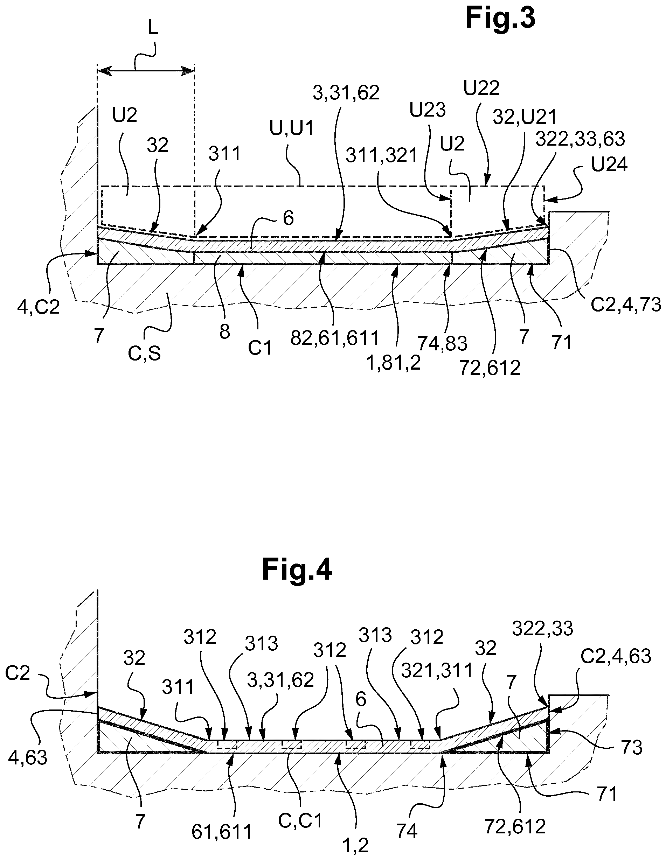

Le couloir de circulation C est emprunté par les animaux cheminant entre les différents espaces d'accueil A. Ce couloir de circulation C est avantageusement équipé d'un racleur U (figure 3).

De préférence, ce couloir de circulation C est du type encaissé.

A cet égard, tel qu'illustré notamment sur la figure 3, ce couloir de circulation C comprend en particulier une face de fond C1 (avantageusement horizontale et plane) bordée par deux faces latérales C2 (avantageusement verticale et plane).

Ces faces latérales C2 forment ici la transition entre le couloir de circulation C et l'espace d'accueil A.

A titre d'exemple, la face de fond C1 a une largeur comprise entre 2 et 5 m.

Encore à titre d'exemple, les faces latérales C2 ont une hauteur d'au moins 10 cm ; le long d'une rangée de logettes, une face latérale C2 forme une sorte de marche dont la hauteur est par exemple comprise entre 15 et 25 cm.

En l'espèce, les espaces d'accueil des animaux A comprennent une table d'alimentation A1 et des rangées de logettes A2.

La table d'alimentation A1 (dite encore auge ou râtelier) est la zone dans laquelle les aliments sont déposés / acheminés pour les animaux.

Cette table d'alimentation A1 est séparée du couloir de circulation C (formant encore une aire d'alimentation) par un muret surmonté par un cornadis.

Les rangées de logettes A2 sont ménagées sur au moins une ligne. Une logette comprend, de manière classique en soi, deux séparations latérales (tubulaires), un arrêtoir et une barre au garrot.

Les logettes A2 constituent un compromis entre un couchage confortable pour le bovin, le respect du mouvement levé/couché, une station debout confortable et un minimum de souillures dans la logette.

### Revêtement de sol

Le revêtement de sol 1 selon l'invention consiste en un accessoire qui est destiné à être rapporté sur le sol S de l'enceinte d'élevage E, en neuf ou en rénovation.

Le revêtement de sol 1 est avantageusement destiné à équiper l'un au moins des couloirs de circulation C qui longe au moins un espace d'accueil A (les deux couloirs de gauche sur les figures 1 et 2).

De manière générale, le revêtement 1 comporte deux surfaces opposées :
- une surface inférieure 2, destinée à reposer sur le sol S, et
- une surface supérieure 3, opposée, destinée à servir de surface d'appui pour les animaux.

Les deux surfaces 2, 3 définissent l'épaisseur du revêtement de sol 1.

Ces deux surfaces 2, 3 sont reliées par deux paires de surfaces :
- deux surfaces latérales 4 (longitudinales), formant deux bordures latérales du revêtement de sol 1, et
- deux surfaces transversales (non représentées).

Le revêtement 1 s'étend avantageusement sur toute la longueur du couloir de circulation C.

Le revêtement 1 s'étend avantageusement sur toute la largeur du couloir de circulation C : la largeur du revêtement de sol 1 (distance entre ses surfaces latérales 4) est alors avantageusement identique, au jeu près, à la largeur du couloir de circulation C (distance entre ses deux faces latérales C2).

En d'autres termes, ce revêtement de sol 1 est dimensionné de sorte que :
- sa surface inférieure 2 recouvre toute la face de fond C1 du couloir de circulation C, et
- ses surfaces latérales 4 soient chacune attenantes de l'une des deux faces latérales C2 du couloir de circulation C.

Selon l'invention, la surface supérieure 3 du revêtement de sol 1 comporte plusieurs bandes longitudinales 31, 32 (ayant avantageusement chacune un contour rectangulaire) ; cette surface supérieure 3 est encore avantageusement délimitée par deux bordures latérales 33 (le long des surfaces latérales 4).

En l'espèce, la surface supérieure 3 comporte avantageusement une bande centrale 31 bordée par au moins une bande latérale 32 (s'étendant le long d'une bordure latérale 33 de la surface supérieure 3).

Les bandes longitudinales 31, 32 s'étendent avantageusement sur la longueur du couloir de circulation C équipé.

La bande centrale 31 est ici bordée par deux bandes latérales 32 (s'étendant chacune le long de l'une des deux bordures latérales 33 de la surface supérieure 3). De manière alternative, non représentée, la bande centrale 31 peut être bordée par une unique bande latérale 32.

Plus précisément, la bande centrale 31 comporte notamment deux bordures latérales 311, s'étendant parallèlement l'une par rapport à l'autre et parallèlement aux deux bordures latérales 33 de la surface supérieure 3.

De son côté, la bande latérale 32 est également délimitée par deux bordures latérales 321, 322, s'étendant parallèlement l'une par rapport à l'autre et parallèlement aux deux bordures latérales 33 de la surface supérieure 3.

Ces deux bordures latérales 321, 322 de la bande latérale 32 consistent en :
- une bordure intérieure 321, longeant la bande centrale 31 et confondue avec l'une des deux bordures latérales 311 de la bande centrale 31, et
- une bordure extérieure 322 (libre), à distance de la bande centrale 31, formant une bordure latérale 33 de la surface supérieure 3.

Ladite au moins une bande latérale 32 présente une pente qui descend en direction de la bande centrale 31, depuis sa bordure extérieure 322 jusqu'à sa bordure intérieure 321 (formant ainsi une sorte de rampe latérale).

La pente de la bande latérale 32 s'étend ainsi transversalement par rapport à l'axe longitudinal du revêtement 1.

Cette pente de la bande latérale 32 (vers la bande centrale 31) assure alors un écoulement et une canalisation des liquides vers la bande centrale 31. La bande latérale 32 est alors maintenue relativement sèche.

En pratique, et tel que développé par la suite en relation avec les figures 3 et 4, cette bande latérale 32 en pente est avantageusement obtenue par une variation de l'épaisseur du revêtement de sol 1 (sous-jacente ou à l'aplomb de cette bande latérale 32).

Cette épaisseur du revêtement de sol 1, sous-jacente de la bande latérale 32, est décroissante depuis sa bordure extérieure 322 jusqu'à sa bordure intérieure 321.

Au niveau de la bande centrale 31, le revêtement de sol 1 comporte avantageusement une épaisseur constante.

Dans ce contexte, la surface supérieure 3 du revêtement de sol 1 est avantageusement polyédrique (composée de plusieurs faces planes rectangulaires), avec la bande centrale 31 ménagée de préférence entre les deux bandes latérales 32 en pente.

De manière générale, la largeur de la surface supérieure 3 (distance horizontale entre ses bordures latérales 33) correspond, au jeu près, à la largeur de la face de fond C1 (par exemple une largeur comprise entre 2 et 5 m).

La largeur L d'une bande latérale 32 (distance horizontale entre ses bordures latérales 321, 322) est supérieure à 100 mm, de préférence de 200 à 800 mm, de préférence encore de 200 à 300 mm.

Une bande latérale 32 comporte avantageusement une pente allant de 1 à 10 %, de préférence allant de 1,5 et 6%, de préférence encore allant de 3 à 5%.

La bande latérale 32 peut comporte une pente constante. De manière alternative, cette bande latérale 32 peut comporte au moins deux pentes différentes (par exemple sous la forme d'une bande latérale 32 diédrique) avec des pentes croissantes depuis la bordure intérieure 321 vers la bordure extérieure 322 ; par exemple, une sous-bande intérieure comporte une pente à 3% et une sous-bande extérieure comporte une pente à 5%.

La largeur de la bande centrale 31 (distance horizontale entre ses bordures latérales 311) est avantageusement comprise entre 1,5 et 4,5 m.

En pratique, la bande latérale 32 inclinée est utile le long d'un cornadis. Elle éloigne en effet les liquides par rapport aux pattes antérieures des animaux en présence.

Une telle bande latérale 32 est aussi intéressante le long d'une logette. En effet, pour accéder à cette logette, les derniers pas des animaux s'effectuent sur une surface relativement sèche. L'entraînement des salissures vers les espaces d'accueil est ainsi limité. Cette approche est notamment intéressante pour limiter les salissures des mamelles des vaches laitières avec le risque de mammite qui en découle.

Cette bande latérale 32 évite encore l'accumulation de liquides de long d'un mur ou muret, recoin qui est souvent difficile à nettoyer.

Selon un mode de réalisation particulier, illustré schématiquement sur la figure 4, la bande centrale 31 peut comporter des rainures longitudinales 312.

La bande centrale 31, sur laquelle les animaux sont destinés à prendre appui, est divisée en une pluralité de portions d'appui 313 séparées, les unes des autres, par les rainures 312.

Les rainures 312 constituent ainsi des structures de genre rigoles ou gouttières s'ouvrant vers le haut, au travers de la bande centrale 31.

Ces rainures 312 sont aptes à collecter (par gravité) et à contenir les liquides s'écoulant sur le revêtement de sol 1, de sorte que ces liquides stagnent le moins possible sur les portions d'appui 313.

Par « liquides », on entend en particulier les déjections liquides produites par les animaux de l'élevage, en particulier leur urine.

Chaque rainure 312 peut être définie par deux dimensions :
- une largeur, correspondant à la distance séparant ses deux faces latérales en regard, et
- une profondeur, correspondant à la distance maximale séparant, d'une part, sa face de fond et, d'autre part, les portions d'appui 313 attenantes.

En l'espèce, les rainures 312 ont avantageusement chacune :
- une largeur d'au maximum 50 mm, de préférence comprise entre 15 et 50 mm, et
- une profondeur d'au minimum de 15 mm, avantageusement comprise entre 15 et 40 mm.

Les rainures 312 sont avantageusement régulièrement espacées, les unes par rapport aux autres, sur la bande centrale 31.

Ces rainures 312 s'étendent avantageusement parallèlement les unes par rapport aux autres, et par rapport aux deux bordures latérales 311 de la bande centrale 31.

De préférence, chaque bordure latérale 311 de la bande centrale 31 est bordée par une rainure 312 pour collecter les liquides s'écoulant le long des bandes latérales 32.

Encore de manière générale, chaque bande latérale 32 est avantageusement lisse (dépourvue de rainures).

### Modes de réalisation

Les figures 3 et 4 représentent deux modes de réalisation particuliers de l'invention.

Dans ces modes de réalisation particuliers, le revêtement de sol 1 comprend :
- une couche supérieure 6, formant la surface supérieure 3 du revêtement de sol 1,
- au moins un longeron 7 sous-jacent, latéral, destiné à être rapporté entre le sol S et ladite couche supérieure 6, pour relever cette couche supérieure 6 sur les côtés et former ladite au moins une bande latérale 32, et éventuellement
- une plaque 8 sous-jacente, destiné à être rapporté entre le sol S et ladite couche supérieure 6, pour participer à former la bande centrale 31.

En l'espèce, deux modes de réalisation sont illustrés :
- un premier mode de réalisation selon la figure 3 qui comprend une couche supérieure 6 reposant sur le sol S via deux longerons 7 et une plaque 8 sous-jacente, et
- un second mode de réalisation selon la figure 4 qui comprend une couche supérieure 6 dont les côtés sont relevés par les deux longerons 7 sous-jacents (sans plaque 8 sous-jacente).

La couche supérieure 6 est avantageusement réalisée dans un matériau élastique, avantageusement monocouche ou multicouches (par exemple avec au moins deux sous-couches superposées).

Cette couche supérieure 6 peut alors être réalisée dans un matériau choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Cette couche supérieure 6 peut être réalisée mono-matériau ou multi-matériaux.

Sur le plan structurel, cette couche supérieure 6 comporte :
- une face inférieure 61, destinée à être orientée vers le sol S,
- une face supérieure 62, correspondant à la surface supérieure 3 du revêtement de sol 1 et destiné à servir de surface d'appui pour les animaux,
- deux faces latérales 63 (longitudinales), et
- deux faces transversales (non représentées).

L'épaisseur de cette couche supérieure 6 (entre les faces inférieure 61 et supérieure 62) est avantageusement constante.

Par exemple, cette couche supérieure 6 possède une épaisseur comprise entre 10 et 50 mm, de préférence entre 10 et 35 mm.

La face inférieure 61 de la couche supérieure 6 forme avantageusement plusieurs bandes (symétriques des bandes 31, 32 de la surface supérieure 3 du revêtement de sol 1), à savoir une bande centrale 611 bordée par au moins une bande latérale 612 (correspondant respectivement à la bande centrale 31 et à la au moins une bande latérale 32 de la surface supérieure 3).

La bande centrale 611 de la face inférieure 61 repose sur :
- la plaque 8 sous-jacente, selon le mode de réalisation de la figure 3, ou
- le sol S, entre les deux longerons 7, selon la mode de réalisation de la figure 4.

La bande latérale 612 de la face inférieure 61 repose sur un longeron 7 précité.

Les faces latérales 63 de la couche supérieure 6 forment ici une partie supérieure de la hauteur de la surface latérale 4 du revêtement de sol 1.

Le relief de la face supérieure 62 de la couche supérieure 6 est ici réalisé par les pièces rapportées sous cette couche supérieure 6, à savoir ledit au moins un longeron 7 et éventuellement la plaque 8.

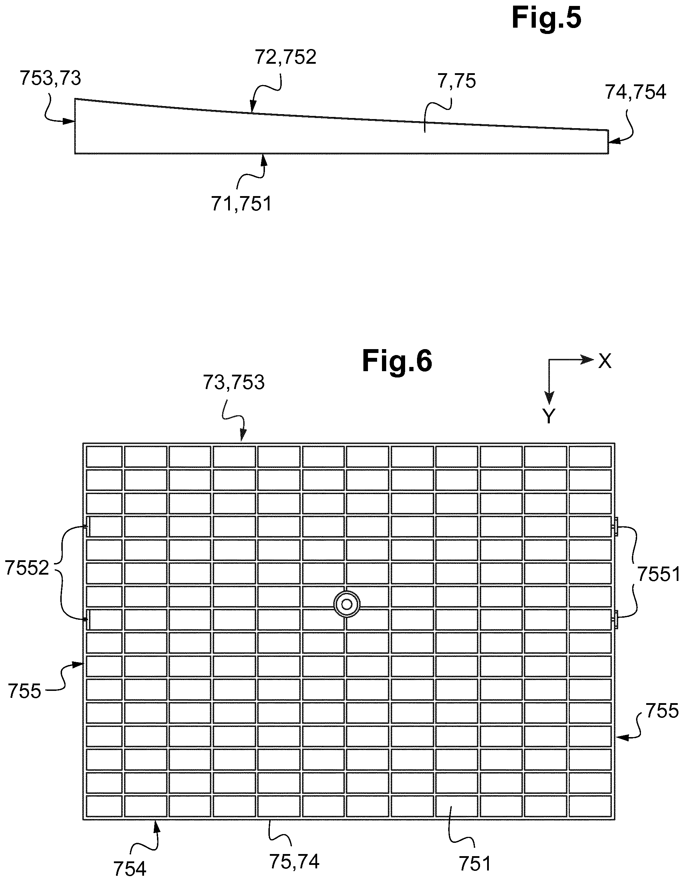

Tel que représenté en détails sur la figure 5, un longeron 7 possède différentes faces (avantageusement planes) :
- une face inférieure 71, destinée à reposer sur le sol S,
- une face supérieure 72, opposée, destinée à servir de surface de réception pour la couche supérieure 6 (et en particulier pour une bande latérale 612 de sa face inférieure 61),
- une face extérieure 73, dite encore « extrémité extérieure », destinée à venir en appui sur une face latérale C2 du couloir de circulation C, et
- une face intérieure 74, opposée à ladite face extérieure 73 et dite encore « extrémité intérieure ».

Les faces inférieure 71 et supérieure 72, opposées, convergent depuis l'extrémité extérieure 73 vers l'extrémité intérieure 74.

La largeur d'un longeron 7 (distance horizontale entre ses extrémités 73, 74) est supérieure à 100 mm, de préférence de 200 à 800 mm, de préférence encore de 200 à 300 mm.

Les faces inférieure 71 et supérieure 72 définissent avantageusement une pente (unique ou avec augmentation de pente) allant de 1 à 10 %, de préférence allant de 1,5 et 6%, de préférence encore allant de 3 à 5%.

A titre d'exemple, le longeron 7 comporte :
- une extrémité intérieure 74 ayant une hauteur de 1 à 3 mm, et
- une extrémité extérieure 73 ayant une hauteur de 10 à 20 mm.

La face extérieure 73 du longeron 7 forme ici une partie inférieure de la hauteur de la surface latérale 4 du revêtement de sol 1.

Ce longeron 7 est avantageusement réalisé en matériau caoutchouc ou en matériau plastique.

Par matériau « caoutchouc », on englobe les matériaux choisis parmi :
- les matériaux élastomères, à savoir par exemple le caoutchouc naturel, le caoutchouc « naturel synthétique » (ou polyisoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Par matériau « plastique », on englobe par exemple le polyéthylène (PE).

Selon un mode de réalisation particulier, le longeron 7 est formé par plusieurs pièces 75 juxtaposées et alignées.

Tel qu'illustré en figures 5 et 6, chaque pièce 75 comporte :
- une face inférieure 751, formant une partie de la face inférieure 71 du longeron 7,
- une face supérieure 752, opposée, formant une partie de la face supérieure 72 du longeron 7,
- une face extérieure 753, formant une partie de la face extérieure 73 du longeron 7,
- une face intérieure 754, formant une partie de la face intérieure 74 du longeron 7, et
- deux bordures transversales 755, munies de structures d'emboîtement complémentaires 7551, 7552 (par exemple du type tenon 7551 / mortaise 7552).

Une bordure transversale 755 d'une première pièce 75 est destinée à venir de manière attenante à une bordure transversale 755 d'une seconde pièce 75.

Ces deux bordures transversales 755 attenantes peuvent alors être fixées / solidarisées ensemble par emboîtement via les structures d'emboîtement complémentaires 7551, 7552.

Chaque pièce 75 peut comporter encore au moins un orifice traversant pour sa fixation dans le sol par la mise en oeuvre de quincaillerie (pointes par exemple).

Le cas échéant, selon la figure 3, la plaque 8 est avantageusement réalisée en matériau caoutchouc ou en matériau plastique.

Par matériau « caoutchouc », on englobe les matériaux choisis parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Par matériau « plastique », on englobe le polyéthylène (PE).

Cette plaque 8 consiste avantageusement en une bande longitudinale, parallélépipédique, qui comporte :
- une face inférieure 81, destinée à reposer sur le sol S,
- une face supérieure 82, opposée, destinée à recevoir la bande centrale 611 de la face inférieure 61 de la couche supérieure 6,
- deux faces latérales 83, opposées, destinées à être juxtaposées par rapport aux faces intérieures 74 des longerons 7, et
- deux bordures transversales (non représentées).

En pratique, la pose de ce revêtement de sol 1 comprend avantageusement les étapes suivantes :
- la pose dudit au moins un longeron 7, le cas échéant sur la face de fond C1 du couloir de circulation C et le long de l'une de ces faces latérales C2,
- le cas échéant, la pose de la plaque 8 sous-jacente, avantageusement sur la face de fond C1 du couloir de circulation C et entre les longerons 7,
- la pose de la couche supérieure 6.

En particulier, le longeron 7 est posé de sorte que :
- sa face inférieure 71 repose sur le sol S,
- sa face supérieure 72, opposée, sert de surface de réception pour la couche supérieure 6 (et en particulier pour une bande latérale 612 de sa face inférieure 61), et
- sa face extérieure 73 vient en appui sur une face latérale C2 du couloir de circulation C.

### Racleur

Tel que représenté très schématiquement sur la figure 3, le couloir de circulation C est équipé d'un racleur U destiné à transporter le lisier / les déjections.

Le racleur U comporte plusieurs panneaux :
- un panneau central U1 destiné à parcourir et à épouser la bande centrale 31 du revêtement 1, et
- au moins un panneau latéral U2 escamotable, destiné à parcourir et à épouser ladite au moins une bande latérale 32 de ce même revêtement 1.

Ledit au moins un panneau latéral U2 comporte différentes bordures :
- une bordure inférieure U21, en regard de la bande latérale 32,
- une bordure supérieure U22, à distance de la bande latérale 32,
- une bordure intérieure U23, raccordée au panneau central U1 (formant avantageusement charnière) et
- une bordure extérieure U24, libre et destinée à longer l'une des faces latérales C2.

La bordure inférieure U21 du panneau latéral U2 épouse la bande latérale 32.

Cette bordure inférieure U21 comporte alors avantageusement une pente descendante, par rapport à l'horizontal, depuis la bordure extérieure U24 vers la bordure intérieure U23.

En pratique, ce racleur U chemine sur la longueur du revêtement de sol 1.

Lors de ce déplacement, le racleur U pousse le lisier / les déjections présent(s) sur les différentes bandes 31, 32 du revêtement de sol 1 vers une extrémité du revêtement de sol 1.

## Revendications

1. Revêtement destiné à être rapporté sur le sol d'une enceinte pour l'élevage d'animaux, avantageusement un couloir de circulation (C) longeant au moins un espace d'accueil (A) desdits animaux,
lequel revêtement (1) comporte deux surfaces opposées :
- une surface inférieure (2), destinée à reposer sur le sol, et
- une surface supérieure (3), opposée, destinée à servir de surface d'appui pour les animaux,
laquelle surface supérieure (3) du revêtement (1) comporte une bande centrale (31) bordée par au moins une bande latérale (32),
laquelle au moins une bande latérale (32) est délimitée par deux bordures longitudinales :
- une bordure intérieure (321) longeant ladite bande centrale (31), et
- une bordure extérieure (322), à distance de ladite bande centrale (31), formant une bordure latérale (33) de ladite surface supérieure (3),
ladite au moins une bande latérale (32) présente une pente qui descend en direction de ladite bande centrale (31), depuis ladite bordure extérieure (322) jusqu'à ladite bordure intérieure (321),
en ce que ledit revêtement (1) comprend :
- une couche supérieure (6), formant la surface supérieure (3) dudit revêtement (1), avantageusement réalisée dans un matériau élastique, **caractérisé en ce que** ledit revêtement comprend aussi
- au moins un longeron (7) sous-jacent, destiné à être rapporté entre le sol (S) et ladite couche supérieure (6), pour former ladite au moins une bande latérale (32),
lequel au moins un longeron (7) comporte deux faces opposées :
- une face inférieure (71), destinée à reposer sur le sol (S), et
- une face supérieure (72), opposée, destinée à servir de surface de réception pour ladite couche supérieure (6),
lesquelles faces (71, 72) opposées convergent depuis une extrémité extérieure (73) vers une extrémité intérieure (74),
et **en ce que** la largeur de ladite au moins une bande latérale (32), définie horizontalement entre lesdites bordures longitudinales (321, 322), est supérieure à 100 mm.

2. Revêtement de sol selon la revendication 1, **caractérisé en ce que** la surface supérieure (3) du revêtement (1) est polyédrique, avec la bande centrale (31) ménagée entre deux bandes latérales (32) en pente.

3. Revêtement de sol selon l'une quelconque des revendications 1 ou 2, **caractérisé en ce que** la largeur de ladite au moins une bande latérale (32), définie horizontalement entre lesdites bordures longitudinales (321, 322), est de préférence de 200 à 800 mm, de préférence encore de 200 à 300 mm.

4. Revêtement de sol selon l'une quelconque des revendications 1 à 3, **caractérisé en ce que** ladite au moins une bande latérale (32) comporte une pente allant de 1 à 10 %, de préférence allant de 1,5 et 6%, de préférence encore allant de 3 à 5%.

5. Revêtement de sol selon l'une quelconque des revendications 1 à 4, **caractérisé en ce que** ledit au moins un longeron (7) est réalisé en matériau caoutchouc ou en matériau plastique.

6. Revêtement de sol selon l'une quelconque des revendications 1 à 5, **caractérisé en ce que** l'épaisseur de la couche supérieure (6) est constante.

7. Enceinte pour l'élevage d'animaux dont au moins une partie du sol (S) est recouverte par un revêtement (1) selon l'une quelconque des revendications 1 à 6, lequel revêtement (1) comporte deux surfaces opposées :
- une surface inférieure (2), destinée à reposer sur le sol, et
- une surface supérieure (3), opposée, destinée à servir de surface d'appui pour les animaux,
laquelle surface supérieure (3) du revêtement (1) comporte une bande centrale (31) bordée par au moins une bande latérale (32),
laquelle au moins une bande latérale (32) est délimitée par deux bordures longitudinales :
- une bordure intérieure (321) longeant ladite bande centrale (31), et
- une bordure extérieure (322), à distance de ladite bande centrale (31), formant une bordure latérale (33) de ladite surface supérieure (3),
**caractérisé en ce que** ladite au moins une bande latérale (32) présente une pente qui descend en direction de ladite bande centrale (31), depuis ladite bordure extérieure (322) jusqu'à ladite bordure intérieure (321),
**en ce que** ledit revêtement (1) comprend :
- une couche supérieure (6), formant la surface supérieure (3) dudit revêtement (1), avantageusement réalisée dans un matériau élastique, et
- au moins un longeron (7) sous-jacent, destiné à être rapporté entre le sol (S) et ladite couche supérieure (6), pour former ladite au moins une bande latérale (32),
lequel au moins un longeron (7) comporte deux faces opposées :
- une face inférieure (71), destinée à reposer sur le sol (S), et
- une face supérieure (72), opposée, destinée à servir de surface de réception pour ladite couche supérieure (6),
lesquelles faces (71, 72) opposées convergent depuis une extrémité extérieure (73) vers une extrémité intérieure (74),
et **en ce que** la largeur de ladite au moins une bande latérale (32), définie horizontalement entre lesdites bordures longitudinales (321, 322), est supérieure à 100 mm.

8. Enceinte pour l'élevage d'animaux selon la revendication 7, comportant un couloir de circulation (C) longeant au moins un espace d'accueil (A) des animaux, par exemple une table d'alimentation et/ou une rangée de logettes,
lequel couloir de circulation (C) est recouvert par ledit revêtement (1) de sorte que ladite au moins une bande latérale (32) est disposée au niveau de la transition (C2) entre ledit couloir de circulation (C) et ledit espace d'accueil (A).

9. Enceinte pour l'élevage d'animaux selon la revendication 8, **caractérisée en ce que** la surface supérieure (3) du revêtement de sol (1) est polyédrique, avec la bande centrale (31) ménagée entre deux bandes latérales (32) en pente.

10. Enceinte pour l'élevage d'animaux selon l'une quelconque des revendications 8 ou 9, **caractérisée en ce que** ledit couloir de circulation (C) est équipé d'un racleur (U) destiné à transporter le lisier / les déjections,
lequel racleur (U) comporte plusieurs panneaux :
- un panneau central (U1) destiné à parcourir la bande centrale (31) dudit revêtement (1), et
- au moins un panneau latéral (U2) escamotable, destiné à parcourir ladite au moins une bande latérale (32) dudit revêtement (1),
lequel au moins un panneau latéral (U2) comporte différentes bordures :
- une bordure inférieure (U21), en regard de ladite bande latérale (32),
- une bordure supérieure (U22), à distance de ladite bande latérale (32),
- une bordure intérieure (U23), raccordée audit panneau central (U1), et
- une bordure extérieure (U24), libre,
laquelle bordure inférieure (U21) comporte une pente descendante depuis ladite bordure extérieure (U24) vers ladite bordure intérieure (U23).

## Patentansprüche

1. Beschichtung zum Aufbringen auf einen Boden eines Gebäudes für Tierzucht, vorteilhafterweise einer Stallgasse (C), die entlang mindestens eines Aufnahmeraums (A) selbiger Tiere verläuft,
wobei die Beschichtung (1) zwei voneinander abgewandte Oberflächen aufweist:
- eine untere Oberfläche (2), die dazu bestimmt ist, auf dem Boden aufzuliegen, und
- eine obere, abgewandte Oberfläche (3), die dazu bestimmt ist, als Auflagefläche für die Tiere zu dienen,
wobei die obere Oberfläche (3) der Beschichtung (1) einen mittleren Streifen (31) aufweist, der von mindestens einem seitlichen Streifen (32) eingefaßt ist,
wobei der mindestens eine seitliche Streifen (32) von zwei Längsrändern begrenzt ist:
- einem inneren Rand (321), der entlang des mittleren Streifens (31) verläuft, und
- einem äußeren Rand (322) mit Abstand zum mittleren Streifen (31), der einen seitlichen Rand (33) der oberen Oberfläche (3) bildet,
wobei der mindestens eine seitliche Streifen (32) ein Gefälle aufweist, das vom äußeren Rand (322) bis zum inneren Rand (321) zum mittleren Streifen (31) hin verläuft,
wobei die Beschichtung (1)
- eine obere Schicht (6), die die obere Oberfläche (3) der Beschichtung (1) bildet und vorteilhafterweise aus einem elastischen Material gefertigt ist, aufweist,
**dadurch gekennzeichnet, daß** die Beschichtung auch
- mindestens einen darunterliegenden Längsträger (7) aufweist, der dazu bestimmt ist, zwischen dem Boden (S) und der oberen Schicht (6) eingefügt zu werden, um den mindestens einen seitlichen Streifen (32) zu bilden,
wobei der mindestens eine Längsträger (7) zwei voneinander abgewandte Seiten aufweist:
- eine Unterseite (71), die dazu bestimmt ist, auf dem Boden (S) aufzuliegen, und
- eine abgewandte Oberseite (72), die dazu bestimmt ist, als Aufnahmefläche für die obere Schicht (6) zu dienen,
wobei die voneinander abgewandten Seiten (71, 72) von einem äußeren Ende (73) zu einem inneren Ende (74) hin zusammenlaufen,
und daß die horizontal zwischen den Längsrändern (321, 322) definierte Breite des mindestens einen seitlichen Streifens (32) größer als 100 mm ist.

2. Bodenbeschichtung gemäß Anspruch 1, **dadurch gekennzeichnet, daß** die obere Oberfläche (3) der Beschichtung (1) vieleckig ist und der mittlere Streifen (31) zwischen den beiden seitlichen Streifen (32) mit Gefälle angeordnet ist.

3. Bodenbeschichtung gemäß einem der Ansprüche 1 oder 2, **dadurch gekennzeichnet, daß** die horizontal zwischen den Längsrändern (321, 322) definierte Breite des mindestens einen seitlichen Streifens (32) in bevorzugter Weise zwischen 200 und 800 mm, in noch mehr bevorzugter Weise 200 bis 300 mm beträgt.

4. Bodenbeschichtung gemäß einem der Ansprüche 1 bis 3, **dadurch gekennzeichnet, daß** der mindestens eine seitliche Streifen (32) ein Gefälle von 1 bis 10 %, in bevorzugter Weise von 1,5 bis 6 %, in noch mehr bevorzugter Weise von 3 bis 5 % aufweist.

5. Bodenbeschichtung gemäß einem der Ansprüche 1 bis 4, **dadurch gekennzeichnet, daß** der mindestens eine Längsträger (7) aus einem Gummimaterial oder aus einem Plastikmaterial gefertigt ist.

6. Bodenbeschichtung gemäß einem der Ansprüche 1 bis 5, **dadurch gekennzeichnet, daß** die Dicke der oberen Schicht (6) konstant ist.

7. Gebäude für Tierzucht, von dem mindestens ein Teil des Bodens (S) mit einer Beschichtung gemäß einem der Ansprüche 1 bis 6 bedeckt ist, wobei die Beschichtung (1) zwei voneinander abgewandte Oberflächen aufweist:
- eine untere Oberfläche (2), die dazu bestimmt ist, auf dem Boden aufzuliegen, und
- eine obere, abgewandte Oberfläche (3), die dazu bestimmt ist, als Auflagefläche für die Tiere zu dienen,
wobei die obere Oberfläche (3) der Beschichtung (1) einen mittleren Streifen (31) aufweist, der von mindestens einem seitlichen Streifen (32) eingefaßt ist,
wobei der mindestens eine seitliche Streifen (32) von zwei Längsrändern begrenzt ist:
- einem inneren Rand (321), der entlang des mittleren Streifens (31) verläuft, und
- einem äußeren Rand (322) mit Abstand zum mittleren Streifen (31), der einen seitlichen Rand (33) der oberen Oberfläche (3) bildet,
**dadurch gekennzeichnet, daß** der mindestens eine seitliche Streifen (32) ein Gefälle aufweist, das vom äußeren Rand (322) bis zum inneren Rand (321) zum mittleren Streifen (31) hin verläuft,
daß die Beschichtung (1)
- eine obere Schicht (6), die die obere Oberfläche (3) der Beschichtung (1) bildet und vorteilhafterweise aus einem elastischen Material gefertigt ist, und
- mindestens einen darunterliegenden Längsträger (7), der dazu bestimmt ist, zwischen dem Boden (S) und der oberen Schicht (6) eingefügt zu werden, um den mindestens einen seitlichen Streifen (32) zu bilden,
aufweist,
wobei der mindestens eine Längsträger (7) zwei voneinander abgewandte Seiten aufweist:
- eine Unterseite (71), die dazu bestimmt ist, auf dem Boden (S) aufzuliegen, und
- eine abgewandte Oberseite (72), die dazu bestimmt ist, als Aufnahmefläche für die obere Schicht (6) zu dienen,
wobei die voneinander abgewandten Seiten (71, 72) von einem äußeren Ende (73) zu einem inneren Ende (74) hin zusammenlaufen,
und daß die horizontal zwischen den Längsrändern (321, 322) definierte Breite des mindestens einen seitlichen Streifens (32) größer als 100 mm ist.

8. Gebäude für Tierzucht gemäß Anspruch 7 mit einer Stallgasse (C), die entlang mindestens eines Aufnahmeraums (A) der Tiere verläuft, zum Beispiel ein Futtertisch und/oder eine Reihe Liegeplätze,
wobei die Stallgasse (C) mit der Beschichtung (1) so bedeckt ist, daß der mindestens eine seitliche Streifen (32) im Bereich des Übergangs (C2) zwischen der Stallgasse (C) und dem Aufnahmeraum (A) angeordnet ist.

9. Gebäude für Tierzucht gemäß Anspruch 8, **dadurch gekennzeichnet, daß** die obere Oberfläche (3) der Bodenbeschichtung (1) vieleckig ist und der mittlere Streifen (31) zwischen den beiden seitlichen Streifen (32) mit Gefälle angeordnet ist.

10. Gebäude für Tierzucht gemäß einem der Ansprüche 8 oder 9, **dadurch gekennzeichnet, daß** die Stallgasse (C) mit einem Schaber (U) ausgestattet ist, der dazu bestimmt ist, die Gülle / die Fäkalien zu transportieren,
wobei der Schaber (U) mehrere Tafeln aufweist:
- eine zentrale Tafel (U1), die dazu bestimmt ist, den mittleren Streifen (31) der Beschichtung (1) zu durchlaufen,
- mindestens eine einklappbare Tafel (U2), die dazu bestimmt ist, den mindestens einen seitlichen Streifen (32) der Beschichtung (1) zu durchlaufen,
wobei die mindestens eine seitliche Tafel (U2) verschieden Ränder aufweist:
einen unteren Rand (U21) gegenüber des seitlichen Streifens (32),
einen oberen Rand (U22) in einem Abstand zum seitlichen Streifen (32),
einen inneren Rand (U23), der mit der zentralen Tafel (U1) verbunden ist, und
einen freien äußeren Rand (U24),
wobei der untere Rand (U21) ein Gefälle vom äußeren Rand (U24) zum inneren Rand (U23) aufweist.

## Claims

1. A flooring intended to be placed on the ground of an enclosure for breeding animals, advantageously a circulation corridor (C) running alongside at least one accommodation area (A) for said animals,
said flooring (1) having two opposite surfaces:
- a lower surface (2), intended to rest on the ground, and
- an opposite, upper surface (3), intended to serve as a resting surface for the animals,
said upper surface (3) of the flooring (1) including a central strip (31) bordered by at least one side strip (32),
said at least one side strip (32) being delimited by two longitudinal borders:
- an inner border (321) running alongside said central strip (31), and
- an outer border (322), remote from said central strip (31), forming a lateral border (33) of said upper surface (3),
said at least one side strip (32) having a slope that descends towards said central strip (31), from said outer border (322) to said inner border (321),
said flooring (1) comprising:
- an upper layer (6), forming the upper surface (3) of said flooring (1), advantageously made of an elastic material,
**characterized in that** said flooring also comprises:
- at least one underlying stringer (7), intended to be placed between the ground (S) and said upper layer (6), to form said at least one side strip (32),
said at least one stringer (7) including two opposite faces:
- a lower face (71), intended to rest on the ground (S), and
- an opposite, upper face (72), intended to serve as a resting surface for said upper layer (6),
said opposite faces (71, 72) converging from an outer end (73) to an inner end (74),
and **in that** the width of said at least one side strip (32), defined horizontally between said longitudinal borders (321, 322) is higher than 100 mm.

2. The flooring according to claim 1, **characterized in that** the upper surface (3) of the flooring (1) is polyhedral, with the central strip (31) arranged between two sloping side strips (32).

3. The flooring according to any one of claims 1 or 2, **characterized in that** the width of said at least one side strip (32), defined horizontally between said longitudinal borders (321, 322), is preferably between 200 and 800 mm, more preferably between 200 and 300 mm.

4. The flooring according to any one of claims 1 or 3, **characterized in that** said at least one side strip (32) has a slope from 1 to 10 %, preferably from 1.5 to 6 %, more preferably from 3 to 5 %.

5. The flooring according to any one of claims 1 to 4, **characterized in that** said at least one stringer (7) is made of a rubber material or a plastic material.

6. The flooring according to any one of claims 1 to 5, **characterized in that** the thickness of the upper layer (6) is constant.

7. An enclosure for breeding animals, at least part of the ground (S) of which is coated with a flooring (1) according to any one of claims 1 to 6, said flooring (1) having two opposite surfaces:
- a lower surface (2), intended to rest on the ground, and
- an opposite, upper surface (3), intended to serve as a resting surface for the animals,
said upper surface (3) of the flooring (1) including a central strip (31) bordered by at least one side strip (32),
said at least one side strip (32) being delimited by two longitudinal borders:
- an inner border (321) running alongside said central strip (31), and
- an outer border (322), remote from said central strip (31), forming a lateral border (33) of said upper surface (3),
**characterized in that** said at least one side strip (32) has a slope that descends towards said central strip (31), from said outer border (322) to said inner border (321),
**in that** said flooring (1) comprises:
- an upper layer (6), forming the upper surface (3) of said flooring (1), advantageously made of an elastic material, and
- at least one underlying stringer (7), intended to be placed between the ground (S) and said upper layer (6), to form said at least one side strip (32),
said at least one stringer (7) including two opposite faces:
- a lower face (71), intended to rest on the ground (S), and
- an opposite, upper face (72), intended to serve as a resting surface for said upper layer (6),
said opposite faces (71, 72) converging from an outer end (73) to an inner end (74),
and **in that** the width of said at least one side strip (32), defined horizontally between said longitudinal borders (321, 322) is higher than 100 mm.

8. The enclosure for breeding animals according to claim 7, including a circulation corridor (C) running alongside at least one accommodation area (A) for the animals, for example a feeding table and/or a row of stalls, said circulation corridor (C) is coated with said flooring (1) in such a way that said at least one side strip (32) is located at the transition (C2) between said circulation corridor (C) and said accommodation area (A).

9. The enclosure for breeding animals according to claim 8, **characterized in that** the upper surface (3) of the flooring (1) is polyhedral, with the central strip (31) arranged between two sloping side strips.

10. The enclosure for breeding animals according to any one of claims 8 or 9, **characterized in that** said circulation corridor (C) is equipped with a scraper (U) intended to transport the slurry/excreta, said scraper (U) including several panels:
- a central panel (U1) intended to run along the central strip (31) of said flooring (1), and
- at least one foldaway side panel (U2), intended to run along said at least one side strip (32) of said flooring (1),
said at least one side panel (U2) having different borders:
- a lower border (U21), opposite said side strip (32),
- an upper border (U22), remote from said side strip (32),
- an inner border (U23), connected to said central panel (U1), and
- a free, outer border (U24),
said lower border (U21) having a slope that descends from said outer border (U24) to said inner border (U23).
